# EUROPEAN PATENT APPLICATION

(11) **EP 2 653 256 A1**
(43) Date of publication of application: **23.10.2013**
(21) Application number: 11848178.7
(22) Date of filing: 05.12.2011
(51) Int. Cl.: B23K 20/00, B23K 11/12, B23K 103/20

(54) **BONDED OBJECT OF ELECTROCONDUCTIVE MATERIALS**

(30) Priority: 14.12.2010 JP 2010278264
(71) Applicant: Nissan Motor Co., Ltd, Yokohama-shi, Kanagawa 220-8623 (JP)
(72) Inventor: NAKAGAWA, Shigeyuki, Kanagawa 243-0123 (JP); NANBU, Toshikazu, kanagawa 243-0123 (JP); YAMAMOTO, Chika, kanagawa 243-0123 (JP); FUKAMI, Tooru, Kanagawa 243-0123 (JP)
(74) Representative: Grünecker, Kinkeldey, Stockmair & Schwanhäusser
(86) International application number: PCT/JP2011/078081
(87) International publication number: WO 2012/081440

(57) **Abstract**

A bonded body of electrically conductive materials including a bonding interface structure in which paired bonded members (10, 20) made respectively of electrically conductive materials are surface-bonded to each other. The bonding interface structure has at least: a diffusion bonding region in which the electrically conductive materials are mutually diffused; and a plastic flow bonding region which has a pressure bonded and recrystallized structure through plastic flow of the electrically conductive materials.

## Description

### TECHNICAL FIELD

The present invention relates to a bonded body of electrically conductive materials.

### BACKGROUND ART

In order to increase freedom in shape of bonded members in resistance welding, to facilitate setting of welding conditions, and to improve electric current efficiency, paired bonded members are made to slide in contact with each other, the sliding is stopped when the insulating coating on the surfaces are peeled away, and the bonded members are melted and bonded by resistance heating (see Patent Document 1 for example).

### PRIOR ART DOCUMENT

### PATENT DOCUMENT

Patent Document 1: Japanese Patent Application Publication No. Hei 11-138275

### SUMMARY OF INVENTION

### TECHNICAL PROBLEM

However, the electric current for resistance heating is concentrated in a high-surface-pressure area of the contact surface (bonding surface) between the bonded members and does not flow uniformly over the entire contact surface. Accordingly, the heating is not uniform and only bonding of limited area and shape is possible. In other words, the conventional technique has a problem in that a bonding interface structure with excellent bonding strength and excellent waterproofness is difficult to obtain.

The present invention has been made to solve the above-described problem of the conventional technique and an object thereof is to provide a bonded body of electrically conductive materials including a bonded interface structure with excellent bonding strength and excellent waterproofness.

### SOLUTION TO PROBLEM

The present invention for achieving the above-described object is a bonded body of electrically conductive materials including a bonded interface structure in which paired bonded members made respectively of electrically conductive materials are surface-bonded to each other. The bonding interface structure has at least: a diffusion bonding region in which the electrically conductive materials are mutually diffused; and an plastic flow bonding region which has a pressure bonded and recrystallized structure through plastic flow of the electrically conductive materials.

### EFFECTS OF THE INVENTION

In the present invention, since the bonded members are physically bonded by the plastic flow bonding region in addition to the diffusion bonding region, the bonding interface has strength close to the base material characteristics of the bonded members and excellent bonding strength can be thereby secured over the entire bonding surface. In other words, it is possible to provide a bonded body of electrically conductive materials including a bonding interface structure with excellent bonding strength and excellent waterproofness.

Other objects, characteristics, and attributes of the present invention will become apparent by referring to preferable embodiments given as examples in the following descriptions and the attached drawings.

### BRIEF DESCRIPTION OF DRAWINGS

[Fig. 1] Fig. 1 is a cross-sectional photograph for explaining a bonding interface structure of a bonded body in Embodiment 1.
[Fig. 2] Fig. 2 is an enlarged photograph for explaining a diffusion bonding region shown in Fig. 1.
[Fig. 3] Fig. 3 is an enlarged photograph for explaining a plastic flow bonding region shown in Fig. 1.
[Fig. 4] Fig. 4 is an enlarged photograph for explaining an intermediate material interposed bonding region shown in Fig. 1.
[Fig. 5] Fig. 5 is a cross-sectional photograph for explaining a bonding interface structure in a comparative example.
[Fig. 6] Fig. 6 is an enlarged photograph for explaining a diffusion bonding region in the comparative example.
[Fig. 7] Fig. 7 is an enlarged photograph for explaining an intermediate material interposed bonding region shown in Fig. 5.
[Fig. 8] Fig. 8 is a schematic view for explaining an example of a bonding apparatus of Embodiment 1.
[Fig. 9] Fig. 9 is a flowchart for explaining a bonding method of Embodiment 1.
[Fig. 10] Fig. 10 is a cross-sectional photograph for explaining a bonding interface structure of a bonded body in Embodiment 2.
[Fig. 11] Fig. 11 is an enlarged photograph for explaining a diffusion bonding region shown in Fig. 10.
[Fig. 12] Fig. 12 is an enlarged photograph for explaining a plastic flow bonding region shown in Fig. 10.

### DESCRIPTION OF EMBODIMENTS

Embodiments of the present invention are described below with reference to the drawings.

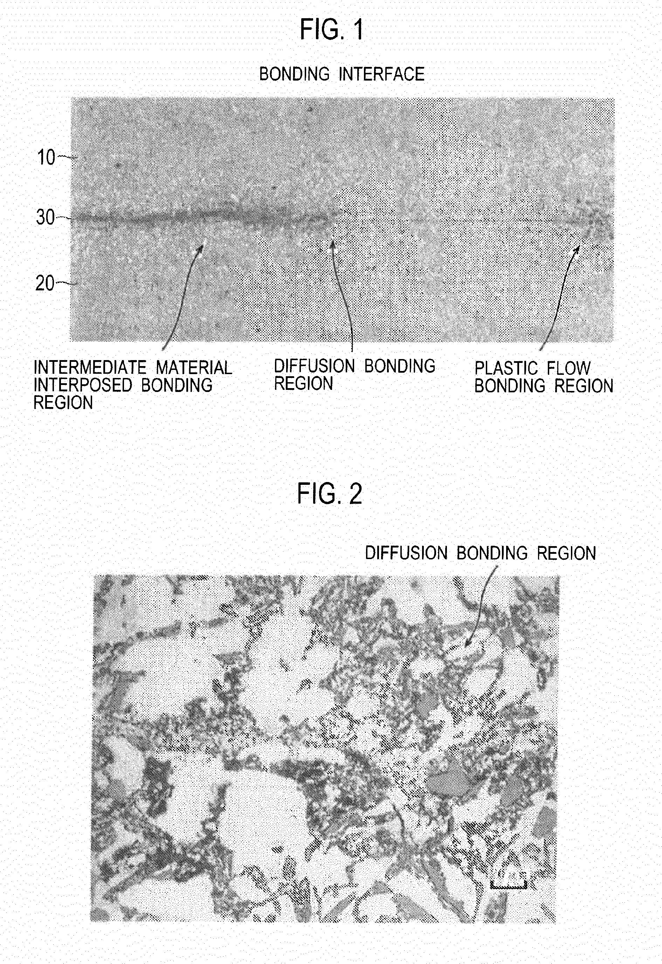

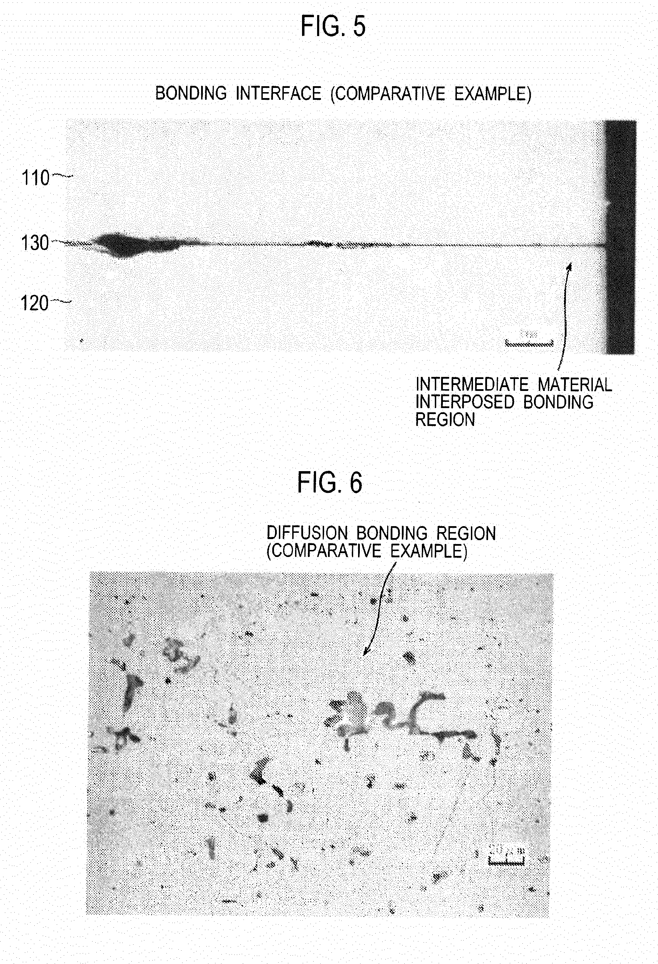

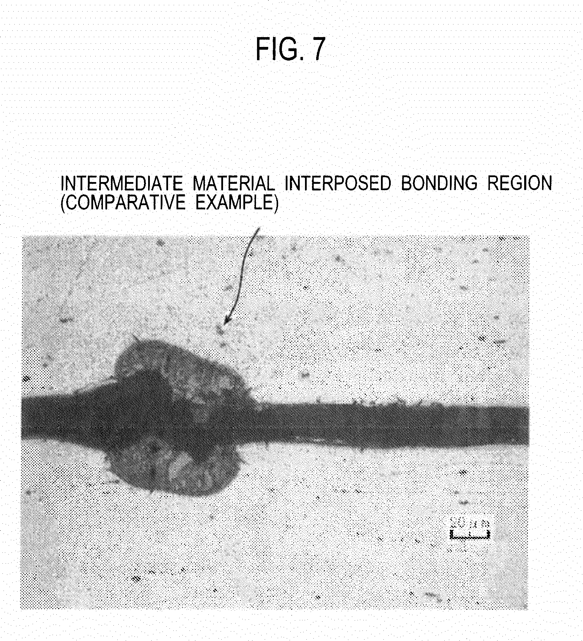

Fig. 1 is a cross-sectional photograph for explaining a bonding interface structure of a bonded body in Embodiment 1. Figs. 2, 3, and 4 are enlarged photographs for explaining a diffusion bonding region, a plastic flow bonding region, and an intermediate material interposed bonding region which are shown in Fig. 1. Fig. 5 is a cross-sectional photograph for explaining a bonding interface structure in a comparative example. Fig. 6 is an enlarged photograph for explaining a diffusion bonding region in the comparative example. Fig. 7 is an enlarged photograph for explaining an intermediate material interposed bonding region shown in Fig. 5.

The bonding interface structure of the bonded body in Embodiment 1 is formed by utilizing, for example, resistance heating and frictional heat (plastic flow), and is configured in such a way that paired bonded members 10, 20 made respectively of electrically conductive materials are surface-bonded to each other with an intermediate member 30 interposed therebetween. The bonding interface structure has the diffusion bonding region, the plastic flow bonding region, and the intermediate material interposed bonding region. The intermediate member 30 is made of an electrically conductive material having a lower melting point than that of the electrically conductive material forming at least one of the bonded members 10, 20.

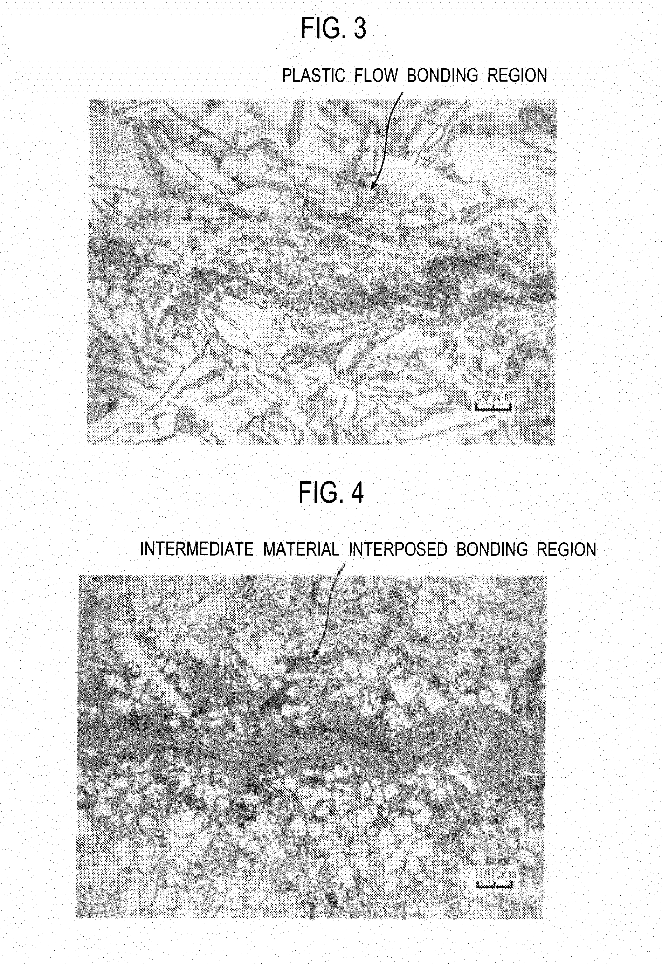

As shown in Fig. 2, the diffusion bonding region is a region in which the bonded members 10, 20 are mutually and directly diffused and, in the embodiment, the intermediate member 30 is discharged or diffused into, and thus exists, in the diffusion bonding region. As shown in Fig. 3, the plastic flow bonding region is a region which has a pressure bonded and recrystallized structure through plastic flow of the electrically conductive materials. As shown in Fig. 4, the intermediate material interposed bonding region is a region including the intermediate member 30 and the diffusion bonding region in which the electrically conductive material forming the intermediate member 30 is diffused into the electrically conductive materials forming the bonded members 10, 20.

As shown in Figs. 1 to 4, since the bonded members 10, 20 are physically bonded by the plastic flow bonding region in addition to the diffusion bonding region and the intermediate material interposed bonding region, the bonding interface of Embodiment 1 has strength close to the base material characteristics of the bonded members 10, 20 and excellent bonding strength can be thereby secured over the entire bonding surface. In other words, it is possible to provide a bonded body of electrically conductive materials which has a bonding interface structure with excellent bonding strength and excellent waterproofness.

The intermediate member 30 interposed between the bonded members 10, 20 has a lower melting point than that of the electrically conductive materials forming at least one of the bonded members 10, 20, and can be bonded at a low temperature. This reduces the effects of the heat on the bonded members 10, 20 and also facilitates the bonding in the case of forming the bonding interface structure in Embodiment 1.

Meanwhile, the bonding interface structure in the comparative example shown in Fig. 5 is formed by utilizing only the resistance heating and is configured such that paired bonded members 110, 120 made respectively of electrically conductive materials are surface-bonded to each other with an intermediate member 130 interposed therebetween. The bonding interface structure of the comparative example has the diffusion bonding region and the intermediate material interposed bonding region, but no plastic flow bonding region exists therein.

As shown in Fig. 6, the intermediate member 130 is discharged or diffused into, and is thus included in the diffusion bonding region but the amount thereof is very limited. As shown in Fig. 6, although the intermediate member 130 and the diffusion bonding region in which the electrically conductive material forming the intermediate member 130 is diffused into the electrically conductive materials forming the bonded members 110, 120 can be seen in the intermediate material interposed bonding region, oxide films are scattered and most areas of the intermediate material interposed bonding region are gaps. In other words, in the bonding interface structure of the comparative example, since bonding is local and the strength and the waterproofness deteriorate due to generation of voids, it is difficult for the bonding interface structure to exert excellent bonding strength and excellent waterproofness.

Note that each of the bonded members 10; 20 is a high-pressure die-casting (HPDC) and an aluminum die-cast material (ADC12) is used therefor. The intermediate member 30 is a foil with a thickness of 10 µm and made of zinc (Zn) which is a eutectic reaction material forming a low-temperature eutectic with aluminum. The bonded members 110, 120 are made of an aluminum rolled material (A5052). The intermediate member 130 is made of zinc and is a foil with a thickness of 10 µm.

Since the eutectic reaction material forms a liquid phase and promotes mutual diffusion between the bonded members and between the eutectic reaction material and each of the bonded members, excellent bonding strength can be secured. In addition, since the gaps are filled with the formed liquid phase, excellent waterproofness can be achieved even in bonding of a large area and bonding of a curved surface. Accordingly, the bonding interface structure of Embodiment 1 is particularly effective for parts where a high degree of waterproofness is required and for parts having a two-dimensionally curved surface or a large area. The thickness of the eutectic reaction material is, for example, 10 µm to 100 µm, but is not particularly limited to this. Moreover, the thickness can be changed as appropriate for the required parts.

Moreover, since the intermediate member 30 changes to the liquid phase at the low melting point by the eutectic reaction thereof and serves a role of suppressing re-oxidation by blocking oxygen, bonding can be performed under normal atmospheric conditions, in a short time and with a low input of heat compared to vacuum brazing which requires a vacuum atmosphere and a long time. This is preferable as it enables facilitation of mass production. The eutectic reaction material forming a low-temperature eutectic with aluminum is not limited to zinc and any one of copper (Cu), Tin (Sn), and silver (Ag) can be used.

The bonded members 10, 20 are not limited to the case in which the bonded members 10, 20 are made of the same material (the same kind of metal). In the bonding interface of Embodiment 1, the bonded members 10, 20 are physically bonded by the plastic flow bonding region in addition to the diffusion bonding region and the intermediate material interposed bonding region and dissimilar material bonding is thereby possible. Hence, it is possible to make one of the bonded members 10, 20 from aluminum and make the other one of the bonded members 10, 20 from an iron-based material or a magnesium-based material. In this case, since a dissimilar material bonded body of Al-Fe or Al-Mg can be obtained, the bonded body can be easily used as an automobile part such as an exhaust manifold.

The bonded members 10, 20 are not particularly limited to high-pressure die-castings (HPDC). Since the bonding interface structure of Embodiment 1 is formed below the bonded members 10, 20 melting points and effects of any contained gas are suppressed, freedom in selection of casting materials is large (the casting materials can be selected from a wide range of materials). Moreover, since an aluminum high-pressure die-casting is a low-cost structural material, the manufacturing cost of the bonded body can be reduced.

The intermediate member 30 can be made of an electrically conductive material forming the liquid phase instead of the eutectic reaction material. In this case, freedom in selection of the intermediate member is large (the material of the intermediate member can be selected from a wide range of materials). Moreover, since the liquid phase is formed by the intermediate member 30 and since the mutual diffusion between the bonded members 10, 20 and between the intermediate member 30 and each of the bonded members 10, 20 is promoted, excellent bonding strength is secured. Furthermore, since the gaps are filled with the formed liquid phase, excellent waterproofness can be easily achieved even in bonding of a large area or a curved surface.

General materials such as a brazing filler material and a low-temperature soldering material which are low-cost compared to the eutectic reaction material are examples of an electrically conductive material forming the liquid phase which can be used instead of the eutectic reaction material.

Next, a description is given of a bonding apparatus for obtaining the bonding interface structure of the bonded body of Embodiment 1.

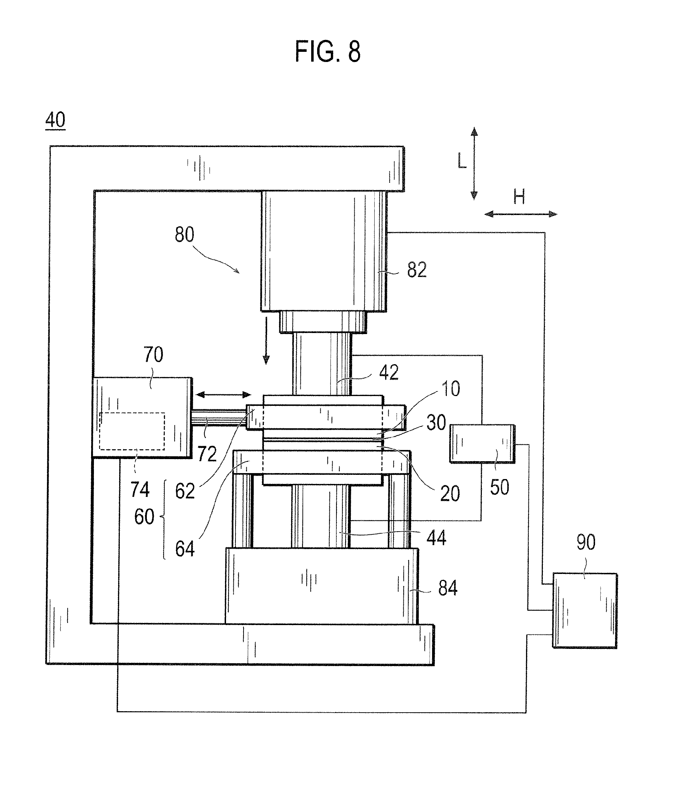

Fig. 8 is a schematic view for explaining an example of the bonding apparatus of Embodiment 1.

The bonding apparatus 40 of Embodiment 1 is a bonding means which utilizes resistance heating and frictional heat (plastic flow), and includes a first electrode 42, a second electrode 44, an electric current supplying device 50, a holding device 60, a sliding device (sliding means) 70, a pressure applying device 80, and a controlling device 90.

A workpiece to be bonded includes the bonded member 10 which is located on the upper side, the bonded member 20 which is located on the lower side, and the intermediate member 30 which is a bonded member disposed between the bonded members 10, 20. Each of the bonded members 10, 20 and the intermediate member 30 has a uniform shape in the direction of vibration which is to be described later and the extending direction of the contact surface thereof is horizontal direction H. The intermediate member 30 is not limited to the configuration in which the intermediate member 30 is a separate body, and the intermediate member 30 can be formed as a coating layer integral with one of the bonded members 10, 20. In this case, the intermediate member 30 can be locally disposed. The coating may be formed by plating, a cladding material, or application.

The first and second electrodes 42, 44 are heating means for heating and softening the bonded members 10, 20 and the intermediate member 30 (contact surfaces of the bonded members 10, 20 between which the intermediate member 30 is interposed) by resistance heating. The first electrode 42 is electrically connected to the bonded member 10 located on the upper side while the second electrode 44 is electrically connected to the bonded member 20 located on the lower side. The first and second electrodes 42, 44 are not limited to the configuration in which the first and second electrodes 42, 44 come in direct contact with the bonded members 10, 20. For example, the first and second electrodes 42, 44 can come in indirect contact via other conductive members. Each of the first and second electrodes 42, 44 can be formed of multiple electrodes.

The electric current supplying device 50 is an electric current supplying means for causing an electric current to flow from the first electrode 42 to the second electrode 44 via the bonded members 10, the intermediate member 30, and the bonded member 20, and is configured to be capable of adjusting, for example, the current value and the voltage value.

The holding device 60 includes a movable holding part 62 located on the upper side and a fixed holding part 64 located on the lower side. The movable holding part 62 is used to hold the bonded member 10 in such a way that the bonded member 10 can reciprocate in the horizontal direction H. The fixed holding part 64 is used to restrict movement of the bonded member 20 in the horizontal direction H and to maintain the bonded member 20 in a stationary state relative to the bonded member 10.

The sliding device 70 is formed of a vibration applying means which is used to cause the bonded member 10 to slide relative to the bonded member 20 and thereby generate frictional heat (plastic flow) at the contact surfaces of the bonded members 10, 20 between which the intermediate member 30 is interposed. The sliding device 70 includes a shaft 72 which causes the bonded member 10 held by the movable holding part 62 to vibrate (oscillate) in the horizontal direction H parallel to the extending direction of the contact surfaces, and a motor 74 which is the drive source of the shaft 72. As an example, the sliding device 70 is configured such that the oscillation amplitude is adjustable within the range 100 µm to 1000 µm and the oscillation frequency is adjustable within the range 10 Hz to 100 Hz. The oscillation mechanism is not particularly limited to a certain type and, for example, ultrasound vibration, electromagnetic vibration, hydraulic vibration, and cam-type vibration can be used.

Since the movement in the vibration applying direction is reciprocation in one direction parallel to the extending direction of the contact surfaces, freedom in the shapes of the contact surfaces is increased. Specifically, since the oscillation can be achieved as long as displacement in one direction is possible, the shapes of the contact surfaces need not to be flat. For example, a configuration in which a protruding portion is fitted to a groove extending in one direction can be employed. Moreover, the sliding device 70 is not limited to the mode utilizing vibration (oscillation mechanism) and can use a rotating movement or a revolving movement of whirling in a circular orbit without rotating, as appropriate. In the case of revolving movement, unlike vibration, relative movement between the contact surfaces does not stop. Accordingly, only the coefficient of dynamic friction acts and the coefficient of friction is stable. Hence, the contact surfaces can be made to uniformly wear.

The pressure applying device 80 includes a pressure applying part 82 located on the upper side and a supporting structure 84 located on the lower side. The pressure applying part 82 is connected to the first electrode 42 and is capable of advancing and retreating in an up-down direction (pressing direction orthogonal to the contact surfaces) L and applying a pressing force to the bonded member 10 via the first electrode 42. The pressure applying part 82 is a surface pressure adjusting means for adjusting a surface pressure of the bonded member 10 pressed against the bonded member 20. For example, a hydraulic cylinder is incorporated in the pressure applying part 82 and the pressure applying part 82 is configured to be capable of adjusting the pressing force. The pressing force is, for example, 2 MPa to 10 MPa. The supporting structure 84 is used to support the second electrode 44 to which the pressing force of the pressure applying device 80 is transmitted via the bonded member 10, the intermediate member 30, and the bonded member 20.

It is possible to use a configuration in which the pressing force of the pressure applying part 82 is applied directly to the bonded member 10 without being transmitted via the first electrode 42. The pressure applying part 82 and the supporting structure 84 can be arranged oppositely. In this case, the second electrode 44 is pressed by the pressure applying part 82 disposed on the lower side and the first electrode 42 is supported by the supporting structure 84 disposed on the upper side. Moreover, a second pressure applying part can be provided instead of the supporting structure 84 to increase freedom in surface pressure adjustment.

The controlling device 90 is a controlling means formed of a computer including, a computation part, a storage part, an input part, and an output part, and is used to integrally control the electric current supplying device 50, the sliding device 70, and the pressure applying device 80. Functions of the controlling device 90 are implemented by causing the computation part to execute a program stored in the storage device.

The program is used to cause the controlling device 90 to execute processes for bonding the bonded members 10, 20 with the intermediate member 30 interposed therebetween in the following way. For example, the sliding device 70 causes the bonded member 10 to vibrate in the horizontal direction H with the pressing surface pressure of the bonded member 10 adjusted by the pressure applying device 80 and thereby cause the contact surfaces of the bonded members 10, 20 between which the intermediate member 30 is interposed to slide. At the same time, resistance heating is performed by causing the electric current supplied from the electric current supplying device 50 to flow from the first electrode 42 to the second electrode 44 via the bonded member 10, the intermediate member 30, and the bonded member 20.

Next, a description is given of a bonding method for obtaining the bonding interface structure of the bonded body of Embodiment 1.

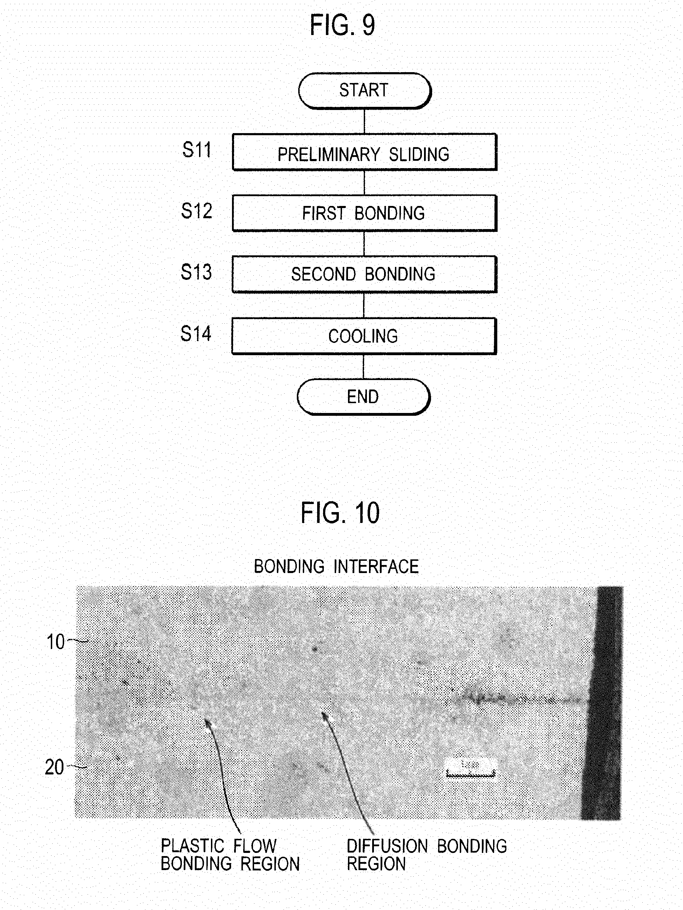

Fig. 9 is a flowchart for explaining the bonding method of Embodiment 1. An algorithm shown by the flowchart of Fig. 9 is stored in the storage part of the controlling device 90 as the program and is executed by the computation part of the controlling device 90.

The bonding method includes a bonding process for bonding the bonded members 10, 20 with the intermediate member 30 interposed therebetween by causing the contact surfaces of the bonded members 10, 20 between which the intermediate member 30 is interposed to slide under pressure and by performing resistance heating by causing electric current to flow from the first electrode 42 to the second electrode 44 via the bonded member 10, the intermediate member 30, and the bonded member 20.

The bonding process broadly includes a preliminary sliding step (S11) for reducing variation in contact resistance, a first bonding step (S12) of starting the formation of the bonding interface of the bonded members 10, 20 between which the intermediate member 30 is interposed by utilizing resistance heating and frictional heat (plastic flow), a second bonding step (S13) of promoting integration of the bonding interface, and a cooling step (S14) of cooling the bonded body (the bonded members 10, 20 bonded to each other with the intermediate member 30 interposed therebetween).

To be more specific, in the preliminary sliding step (S11), a workpiece in which the intermediate member 30 is disposed between the bonded member 10 and the bonded member 20 is mounted and the pressure applying part 82 of the pressure applying device 80 operates to apply a pressing force to the bonded member 10, the intermediate member 30, and the bonded member 20 via the first electrode 42.

Thereafter, the sliding device 70 is driven and the sliding (vibration) of the bonded member 10 in the horizontal direction H is thereby caused. At this time, the movement of the bonded member 20 in the horizontal direction is restricted by the fixed holding part 64 of the holding device 60 and the bonded members 10, the intermediate member 30, and the bonded member 20 are under pressure. Accordingly, friction occurs at the contact surfaces of the bonded members 10, 20 between which the intermediate member 30 is interposed, and aluminum oxide films on faces of the contact surfaces are removed.

In the first bonding step (S12), the electric current supplying device 50 operates and the electric current supplied from the electric current supplying device 50 flows from the first electrode 42 to the second electrode 44 via the bonded member 10, the intermediate member 30, and the bonded member 20, thereby causing resistance heating. As a result, at the contact surfaces, wear, plastic flow, and material diffusion occur due to usage of both frictional heat and resistance heating, and formation of the bonding interface of the bonded members 10, 20 between which the intermediate member 30 is interposed starts.

In the second bonding step (S13), the amount of heat generated by resistance heating is reduced by reducing the supply of the electric current from the electric current supplying device 50 while the frictional heat is increased by increasing the pressing force of the pressure applying device 80. As a result, the amount of heat generated by resistance heating is reduced and the process proceeds to a stage in which integration is promoted in such a way that softened materials are mixed by sliding. The increase in frictional heat can be also achieved by controlling the sliding device 70.

The supply of the electric current by the electric current supplying device 50 is eventually stopped. Then, just before starting the cooling step (S14), the operation of the sliding device 70 is stopped and the bonded member 10 is positioned at a predetermined stationary position (final bonding position). In this case, the pressing force of the pressure applying device 80 can be reduced to improve the positioning accuracy and to facilitate the positioning.

As a result of the first bonding step (S12) and the second bonding step (S13), there is formed the bonding interface structure having: the diffusion bonding region (Fig. 2) in which the bonded members 10, 20 are mutually and directly diffused and the discharged or diffused intermediate member 30 exists; the plastic flow bonding region (Fig. 3) which has a pressure bonded and recrystallized structure through plastic flow of the electrically conductive materials; and the intermediate material interposed bonding region (Fig. 4) including the intermediate member 30 and the diffusion bonding region in which the electrically conductive material forming the intermediate member 30 is diffused into the electrically conductive materials forming the bonded members 10, 20.

In the cooling step (S14), the pressing force of the pressure applying device 80 is increased and, after a predetermined time elapses, the cooling is determined to be completed and the application of pressure is stopped. Then, the pressure applying part 82 (first electrode 42) of the pressure applying device 80 is moved away from the bonded member 10. The completion of the cooling can be directly determined by detecting the temperature.

Thereafter, the bonded members 10, 20 bonded to each other with the intermediate member 30 interposed therebetween are removed.

Note that, in the preliminary sliding step (S11), the aluminum oxide films on the faces of the contact surfaces are removed and the variation in contact resistance due to difference in the thickness of each film is thereby reduced. Accordingly, variation in the amount of heat generated in the subsequent first bonding step (S12) is reduced. Moreover, since preprocessing such as degreasing and removal of the aluminum oxide films by brushing with a wire brush is unnecessary, workability is improved. Note that the preprocessing can be performed if needed.

A preheating step can be provided before the preliminary sliding step (S11) or instead of the preliminary sliding step (S11). In this step, the sliding device 70 is in the stopped state and the electric current supplying device 50 operates such that the contact surfaces are thereby softened by resistance heating. Moreover, the preliminary sliding step (S 11) can be omitted as appropriate.

The second bonding step (S13) can be integrated with the first bonding step (S12) by not decreasing the supply of the electric current and by not increasing the applied pressure force. Moreover, the cooling step (S14) can be omitted as appropriate.

Furthermore, since both of friction heat and resistance heating are used, there is no need to apply a high surface pressure compared to bonding using just one of friction heat and resistance heating. Accordingly, the bonding can be easily performed even when the areas of the contact surfaces are large. Specifically, since the location of concentrated electric current changes during the process and the contact surfaces are uniformly heated without application of a high pressing force (surface pressure) to the contact surfaces, it is possible to perform bonding even when the contact surfaces have large areas or complex shapes and to perform surface bonding with a low strain.

Since bonding is achieved by causing plastic flow (melting) only in surface layers of the contact surfaces, the heating time can be reduced. In addition, in a casting product including gas in the material thereof, expansion and ejection of gas in the material due to heating are less likely to occur and excellent bonding can be achieved.

Note that, when the areas of the respective contact surfaces are set to be substantially the same, the electric current can be prevented from being concentrated on one of the contact surfaces and uniform heating can be easily achieved. Moreover, when a high surface pressure region in which the electric current is concentrated exists at any of the contact surfaces, the region is heated further by resistance heating and the oxide film is forcedly peeled away in the region while the pressing force (surface pressure) and the oscillation affect the region to cause plastic flow and the region wears. As a result, the area where the electric current is concentrated changes from moment to moment. Accordingly, the flow of current is distributed and the contact surfaces are uniformly heated.

Moreover, there is a tendency that more plastic flow bonding regions are formed in the outer peripheral area of the cross section than in the inner area thereof. The reason for this is considered to be because the degree of restraint on plastic flow is relatively low in the outer peripheral area and because friction with material edges has the effect of promoting plastic flow. Meanwhile, there is a tendency that more intermediate material interposed bonding regions are formed on the inner area of the cross section than in the outer peripheral area thereof. The reason for this is considered to be because the intermediate material interposed bonding region and objects generated by eutectic reaction are far away in distance from the outer periphery and are thereby less likely to be discharged and because the discharging is made impossible due to the bonding in the outer peripheral area caused by the plastic flow.

As described above, the bonding interface structure of the bonded body of Embodiment 1 has: the diffusion bonding region (the region in which the electrically conductive materials are mutually diffused); the plastic flow bonding region (the region which has a pressure bonded and recrystallized structure through plastic flow of the electrically conductive materials); and the intermediate material interposed bonding region (the region which includes the intermediate member and the diffusion bonding region in which the electrically conductive material forming the intermediate member is diffused into the electrically conductive materials forming the paired bonded members). In other words, since the bonded members are physically bonded by the plastic flow bonding region in addition to the diffusion bonding region, the bonding interface has strength close to the base material characteristics of the bonded members and excellent bonding strength can be secured over the entire bonding surfaces. Accordingly, it is possible to provide a bonded body of the electrically conductive materials including a bonding interface structure having excellent bonding strength and excellent waterproofness. Moreover, since the intermediate member is made of an electrically conductive material having a low melting point, bonding at a low temperature is made possible. This reduces the effect of the heat on the bonded members and also facilitates the bonding.

When the electrically conductive material having a low melting point includes an electrically conductive material forming a liquid phase, freedom in the selection of the intermediate member is large (the intermediate material can be selected from a wide range of materials). Moreover, since the liquid phase is formed by the intermediate member and the mutual diffusion between the bonded members and between the intermediate member and each of the bonded members is promoted, excellent bonding strength is secured. Furthermore, since the gaps are filled with the formed liquid phase, excellent waterproofness can be easily achieved in bonding of a wide area and bonding of curved surfaces.

When the electrically conductive material forming the liquid phase includes a eutectic reaction material which forms a low-temperature eutectic with the electrically conductive material forming at least one of the paired bonded members, bonding at a lower temperature is made possible. Accordingly, the effects of the heat on the bonded members are further reduced and the bonding is further facilitated.

Instead of the eutectic reaction material, general materials such as a brazing filler material and a low-temperature soldering material which are low-cost compared to the eutectic reaction material, can be used as the electrically conductive material forming the liquid phase.

In the application of castings as the bonded members, since the bonding is performed at or below the melting point and the effects of the contained gas are suppressed, the freedom in selection of the casting material is large (the casting material can be selected from a wide range of materials).

Since the aluminum high-pressure die-casting is a low-cost structural material, the use of the aluminum high-pressure die-casting is preferable.

When aluminum is used for the bonded members and a eutectic reaction material made of zinc, copper, tin, or silver is used as the intermediate member, bonding at a lower temperature is made possible. Accordingly, the effects of heat on the bonded members made of aluminum are further reduced and the bonding is further facilitated.

When one of the bonding members is made of aluminum and the other one of the bonding members is made of an iron-based material or a magnesium-based material, a dissimilar material bonded body of Al-Fe or Al-Mg can be obtained. Accordingly, the bonded body can be easily used as an automobile part.

Next, Embodiment 2 is described.

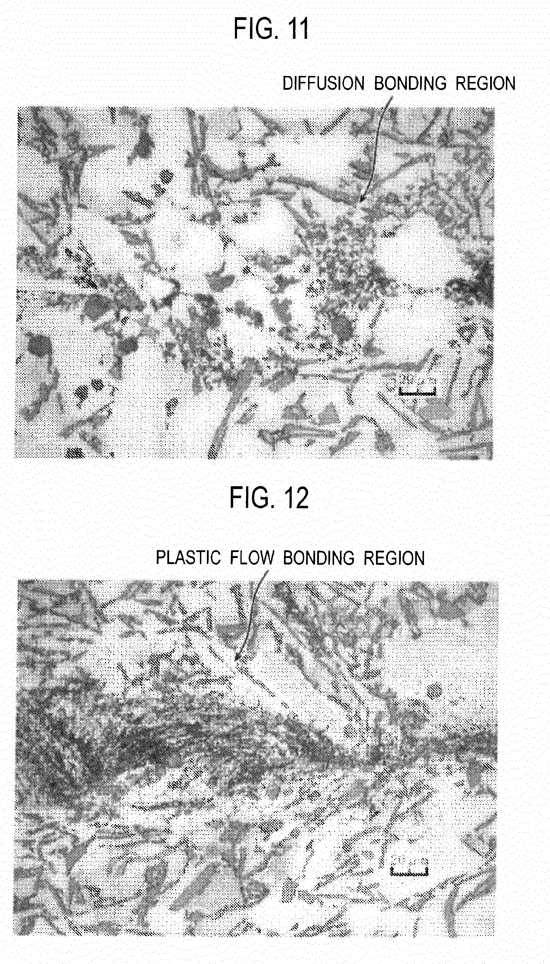

Fig. 10 is a cross-sectional photograph for explaining a bonding interface structure of a bonded body in Embodiment 2. Figs. 11 and 12 are enlarged photographs for explaining a diffusion bonding region and a plastic flow bonding region which are shown in Fig. 10.

In a broad sense, the bonded body of Embodiment 2 is different from the bonded body of Embodiment 1 in that no intermediate member is interposed between paired bonded members 10, 20. As shown in Fig. 10, the bonding interface structure of the bonded body of Embodiment 2 is formed such that the paired bonded members 10, 20 each made respectively of electrically conductive materials are directly surface-bonded to each other. The bonding interface structure also includes the diffusion bonding region and the plastic flow bonding region. Note that each of the bonded members 10, 20 is a high-pressure die-casting (HPDC) and an aluminum die-cast material (ADC12) is used therefor.

As shown in Fig. 11, in the diffusion bonding region, the bonded members 10, 20 are mutually and directly diffused and, unlike Embodiment 1, no discharged or diffused intermediate member exists. As shown in Fig. 12, the plastic flow bonding region has a pressure bonded and recrystallized structure through plastic flow of the electrically conductive materials.

As shown in Figs. 10 to 13, since the bonded members 10, 20 are physically bonded by the plastic flow bonding region in addition to the diffusion bonding region, the bonding interface of Embodiment 2 has strength close to the base material characteristics of the bonded members 10, 20 and excellent bonding strength can be thereby secured over the entire bonding surface. In other words, it is possible to provide a bonded body of electrically conductive materials having a bonding interface structure with excellent bonding strength and excellent waterproofness.

Moreover, since the bonding interface structure has no intermediate member made of a eutectic reaction material and no intermediate material interposed bonding region exists, obtaining strength close to the base material characteristics of the bonded members 10, 20 is easy. In other words, compared to the bonding interface structure of Embodiment 1, the bonding interface structure of Embodiment 2 is particularly effective in such an application where high strength is required, where a high degree of waterproofness is not necessary and where the bonding surface is flat with a small area.

Note that the bonding apparatus and the bonding method of Embodiment 2 are substantially the same as the bonding apparatus and the bonding method of Embodiment 1, except for the fact that no intermediate member is disposed between the bonded members 10, 20, and descriptions thereof are omitted to avoid overlapping descriptions.

As described above, in Embodiment 2, the bonding interface structure has no intermediate member made of a eutectic reaction material and no intermediate material interposed bonding region exists. Accordingly, the bonding interface structure can be used particularly effectively in such an application where high strength is required, where a high degree of waterproofness is not necessary and where the bonding surface is flat with a small area.

The present invention is not limited to the embodiments described above and various modifications can be made within the scope of claims.

For example, the heating means for heating and softening the bonded members (and the intermediate member) is not limited to resistance heating using the electrodes and any one of high-frequency induction heating, infrared heating, heating using a laser beam, and the like can be appropriately selected and used.

The present application is based on Japanese Patent Application No. 2010-278264 filed on December 14, 2010 and the contents disclosed therein are incorporated as a whole by reference.

### REFERENCE SIGNS LIST

- 10, 20: bonded member
- 30: intermediate member
- 40: bonding apparatus
- 42: first electrode
- 44: second electrode
- 50: electric current supplying device
- 60: holding device
- 62: movable holding part
- 64: fixed holding part
- 70: sliding device
- 72: shaft
- 74: motor
- 80: pressure applying device
- 82: pressure applying part
- 84: supporting structure
- 90: controlling device
- H: horizontal direction
- L: up-down direction

## Claims

1. A bonded body of electrically conductive materials comprising a bonding interface structure in which paired bonded members made respectively of electrically conductive materials are surface-bonded to each other, wherein
the bonding interface structure has at least:
a diffusion bonding region in which the electrically conductive materials are mutually diffused; and
a plastic flow bonding region which has a pressure bonded and recrystallized structure through plastic flow of the electrically conductive materials.

2. The bonded body of electrically conductive materials according to claim 1, wherein
an intermediate member made of an electrically conductive material having a lower melting point than that of the electrically conductive material forming at least one of the paired bonded members is interposed between the paired bonded members,
the intermediate member is discharged or diffused into, and thus exists in, the diffusion bonding region, and
the bonding interface structure further has an intermediate material interposed bonding region including: the intermediate member; and the diffusion bonding region in which the electrically conductive material forming the intermediate member is diffused into the electrically conductive materials respectively forming the paired bonded members.

3. The bonded body of electrically conductive materials according to claim 2, wherein the electrically conductive material having the lower melting point includes an electrically conductive material forming a liquid phase.

4. The bonded body of electrically conductive materials according to claim 3, wherein the electrically conductive material forming the liquid phase includes a eutectic reaction material forming a low temperature eutectic with the electrically conductive material forming at least one of the paired bonded members.

5. The bonded body of electrically conductive materials according to claim 3, wherein the electrically conductive material forming the liquid phase includes a brazing material or a low-temperature soldering material.

6. The bonded body of electrically conductive materials according to claim 2, wherein at least one of the paired bonded members is a casting.

7. The bonded body of electrically conductive materials according to claim 6, wherein the casting includes an aluminum high-pressure die-casting.

8. The bonded body of electrically conductive materials according to claim 7, wherein
the paired bonded members are made of aluminum,
the intermediate members is made of a eutectic reaction material forming a low-temperature eutectic with aluminum, and
the eutectic reaction material is any one of zinc, copper, tin, and silver.

9. The bonded body of electrically conductive materials according to claim 7, wherein
one of the paired bonded members is made of aluminum, and
the other one of the paired bonded members is made of an iron-based material or a magnesium-based material.
